# EUROPEAN PATENT SPECIFICATION

(11) **EP 0 697 912 B1**
(45) Date of publication and mention of the grant of the patent: **27.12.1996**
(21) Application number: 94916154.1
(22) Date of filing: 11.05.1994
(51) Int. Cl.: B01F 17/00, B01F 17/16, B01F 17/42

(54) **AN EMULSION OF OIL IN WATER**
EINE EMULSION VON ÖL IN WASSER
EMULSION AQUEUSE

(30) Priority: 11.05.1993 DK 547/93
(43) Date of publication of application: 28.02.1996
(73) Proprietor: COLAS DANMARK A/S, DK-2830 Virum (DK)
(72) Inventor: JENSEN, Bjarne, Bo, DK-8800 Viborg (DK)
(74) Representative: Zeuthen-Aagaard, Henrik
(86) International application number: DK9400189
(87) International publication number: WO9426404

(56) References cited:
- EP-A- 0 022 110
- WO-A-87/05226
- DE-B- 2 646 435

## Description

The present invention relates to an emulsion of oil in water (a so-called oil-in-water emulsion or oil/water emulsion) containing oil, emulgator, water, as well as possible, additional adjuvants.

Emulsions of oil in water are used for many purposes within the industry. Oil/water emulsions are for instance widely used within the cosmetic industry, the coating and paint industry, as well as within the food industry.

By the production of such emulsions, various adjuvants are usually added, especially an emulgator which is an interfacially active substance ensuring a sufficiently low interfacial activity between the two fluids forming part of the emulsion, viz. in the present case the disperse oil phase and the continuous water phase. Furthermore, it is often necessary to add a stabilizer stabilizing the emulsion, i.e. the stabilizer prevents coalescense of the oil phase, which would cause a separation of the emulsion.

It is particularly difficult to produce and stabilize an oil/water emulsion when contaminating substances are present, or when some adjuvants are to be used because such substances may have an unfortunate effect on the interfacial tension.

In some situations it can thus be necessary to add relatively high amounts of stabilizer. Examples of stabilizers are such substances which are based on cellulosis compounds or other polysaccharides. Such stabilizers can, however, cause severe problems when used in practise because they can serve as nutrient substrate for microorganisms, especially when the emulsion should have a pH-value in the neutral range in order to avoid corrosion.

High amounts of stabilizer are furthermore encumbered with the drawback that said stabilizer might reduce the desired properties of the emulsion. When the emulsion for instance is to be used for binding dust, high amounts of polysaccharide-based stabilizer result in a less "fatty" coating when sprayed and consequently a reduced dust-binding effect.

US-A-4,957,559 (Tiesler et al) discloses an oil/water emulsion to be used by the production of insulating materials of mineral wool fibres. The emulsion contains mineral oil to be used as dust-binding agent, silicones to be used as water repellants, and it can furthermore contain a phenolformaldehyde resin as binder. This known oil/water emulsion is produced without the use of an emulgator or another surfactant, as a viscous solution of an aqueous cellulose ether is used instead in a weight ratio of 0.1 to 2.5% by weight calculated relative to the water-insoluble substances of the emulsion. When cellulose ethers are used, these substances form a protective colloid preventing coalecense of the resulting emulsion because the oil drops in the emulsion are surrounded by the protective colloid. Accordingly, the cellulose ethers act as stabilizing agents. The possible oil content is, however, restricted in this type of emulsion, said oil content being of great importance when for instance it is necessary to produce a stock emulsion with a high content of oil which must be transportable to the consumer who sets the desired oil content in the emulsion immediately before use by way of addition of further water.

WO-A-87/05226 (Angelos et al) discloses an oil/water emulsion to be used for dust-binding treatment of coal in order to reduce the risk of spontaneous combustion. This emulsion contains for instance approximately 36% by weight of paraffinic oil, 3.5% by weight of synthetic polyolefin, 3.3% by weight of emulsifier in form of alkyldiamine, 1% by weight of olein according to Merck, as well as 1% of additional adjuvants.

US-A-4,417,992 (Bhattacharyya et al) discloses a method of inhibiting dust for instance on roads, in mines, and in mineral piles, by means of an emulsion containing approximately 24% by weight of paraffinic oil and various adjuvants including surfactants, such as sorbitan monooleate and nonylphenol ethoxylate. These emulsions contain furthermore a water-swellable cross-linked acrylamide-based polymer serving as dust-binder for instance in an amount of approximately 30% by weight.

DE-A-26 46 435 discloses an emulsion of oil in water containing oil, water and an emulgator based on a fatty alcohol glycolether.

Although the known types of oil/water emulsions in many cases possess a reasonable stability for fulfilling the requirements presented to the uses in question, a demand still exists for providing oil/water emulsions with an extra good stability, such as when oil/water emulsions with a high quantity of oil are desired, and when working conditions apply where the additions and/or pollutions might involve a weakening of the stability.

The object of the invention is to provide an oil/water emulsion with a good stability even when said emulsion also contains additions and/or pollutions which can influence the interfacial tension between the two phases, and which does not necessitate an extremely high amount of stabilizer.

The invention relates to an emulsion of oil in water containing oil, emulgator, water, as well as possible, additional adjuvants, said emulsion being characterised by containing as emulgator a combination of an emulgator A and an emulgator B, where emulgator A is based on a fatty amine derivative, and emulgator B is based on a fatty alcohol glycolether.

The two types of emulgator used in the inventive emulsion are conventionally used within their respective fields. Thus emulgator A is known as a moistener for moistening pigments, whereas emulgator B is used within the cosmetic industry. By combining these two types of emulgators A and B it turned out surprisingly that an outstanding stability is obtained even under difficult conditions.

The weight ratio of emulgator A to emulgator B is in most cases in the range 0.3:1 to 3:1, preferably 0.5:1 to 2:1, especially 0.7:1 to 1.5:1.

In order to obtain a particularly good stability, the emulsion may according to the invention advantageously contain emulgator A in an amount of at least 0.2 parts by weight per 100 parts by weight of oil, preferably at least 0.4 parts by weight per 100 parts by weight of oil, and in view of the price the upper limit is usually 2 parts by weight, preferably maximum 1 part by weight per 100 parts by weight of oil.

The presence of emulgator B ensures that the emulsion is stable through a dilution thereof with water, and the content thereof is usually at least 0.3, preferably at least 0.5 parts by weight per 100 parts by weight of oil, and in view of the price the upper limit is usually set at 2.5 parts by weight per 100 parts by weight of oil, preferably no more than 2 parts by weight per 100 parts by weight of oil.

Usually the inventive emulsion also contains a stabilizer, preferably a polysaccharide-based stabilizer, usually in an amount of 0.1 to 1.0 part by weight per 100 parts by weight of oil. By combining the stabilizer with the emulgators A and B it is advantageously possible to obtain a stability at these low amounts, a higher amount of stabilizer partly involving an often undesired increased viscosity and partly reducing the dust-binding effect of the emulsion.

According to a preferred embodiment, the oil in the emulsion is a paraffinic oil, preferably an oil with a viscosity at 40°C of between 100 mm²/s and 1000 mm²/s (100 centistoke and 1,000 centistoke), especially in the range of 300 to 600 mm²/s (300 to 600 centistoke).

In order to be used as dust-binding emulsion at the production of mineral wool, the emulsion may according to the invention advantageously be delivered to the mineral wool manufacturer in form of a stock emulsion containing
45 - 70% by weight of paraffinic oil
0.2 - 0.8% by weight of emulgator A
0.25 - 1.0% by weight of emulgator B
0.07 - 0.3% by weight of polysaccharide stabilizer
0.02 - 0.3% by weight of preservative
and the remainder being water.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

The invention is based on the recognition that by combining an emulgator A based on a fatty amine derivative and an emulgator B based on a fatty alcohol polyglycol ether it is possible to obtain particularly stable emulsions of oil in water with a high content of oil and maintaining the stability even under difficult conditions, such as at the presence of adjuvants or pollutions which can interfere with the interfacial tension between the two phases of the emulsion.

The invention is based on a developing work performed in order to provide a dust-binding emulsion to be used in connection with the production of mineral wool, such as glass-wool production.

Such dust-binding emulsions must fulfill several demanding requirements. With respect to the costs involved in transportation and production, the emulsion should be delivered with a maximum content of oil, such as a stock emulsion containing 50 to 60% of oil. Also with respect to the pollution of the environment during the production of the stock emulsion and during transportation, the content of oil should advantageously be as high as possible. The stock emulsion should be storable without stirring for at least 3 months and with stirring for up to 6 months.

The stock emulsion must maintain a reasonable stability when it is diluted in situ to a 10% oil emulsion, because the stability must match the working procedure and thus be at least 24 hours.

The glass-wool production involves formation of contaminated process water. The process water is circulation water resulting from the wet-washing of the flue gases developed during the production. This process water cannot be discharged into the environment in form of waste water without problems, and accordingly an advantage is found in said process water forming part of the manufactured product. For this purpose, the process water is returned during the process, where it is inter alia used for diluting the stock emulsion in order to obtain the said 10% oil emulsion.

The use of process water may involve problems with respect to the stability because said process water contains various chemicals which can influence the interfacial tension between the two phases of the emulsion. At specific times during the production the process water can also contain glue residues.

For the glass-wool production, the final dust-binding working emulsion containing approximately 1% oil is produced from the above 10% oil emulsion. This working emulsion is produced by addition of other active ingredients according to desire as well as by being diluted with additional process water. The working emulsion serves not only as dust-binding agent and contains therefore usually also other active agents. Thus it contains typically also a binder, such as a phenolformaldehyde resin-based binder, and in some cases a silicone emulsion is furthermore added in order to ensure that the glass wool is water-repellant. It is difficult to maintain the working emulsion stable, and accordingly it is produced immediately before the use. The process requires that the working emulsion is stable for 30 to 60 seconds.

During the production of glass wool, the working emulsion is sprayed through annular spraying means whereby the emulsion is ejected together with compressed air in a flow of melted glass passing downwards through the annular spraying means. In this manner the glass fibres are formed which can be used for the production of insulating materials. During the spraying, the oil drops of the emulsion are distributed across the surfaces of the glass fibres. During the following process, the material is dried in an oven and the fibres are pressed into mats. During the drying process, the water content of the emulsion evaporates in such a manner that the oil and the other additives remain on the surface of the glass fibres. The emulgators contained in the emulsion are decomposed during the drying process, which is important as a risk would otherwise apply of a reemulgation of oil and silicone.

As mentioned the emulsion according to the invention has been developed for use as dust-binding emulsion to be used in connection with production of glass wool. It can, however, also be used for other purposes facing particular requirements to the stability or to the dust-binding properties. Thus the emulsion may according to the invention also be such that it can be used as dust-binding emulsion for reducing the risk of spontaneous combustion of coal as described in the above WO-A-87/05226 or to be used in the method described in US-A-4,417,992 for inhibiting dust for instance on roads, in mines, and in mineral piles.

Other potential possibilities of use are also relevant for the emulsion according to the invention. It can for instance be used as slipping agent in concrete moulds.

As mentioned, the emulsion according to the invention is based on a combination of two different types of emulgators. Emulgator A in form of a fatty amine derivative proved by way of tests to be of great importance for the formation of the oil/water emulsion. Thus it is difficult to emulgate the oil into the water if this emulgator is not used, and the resulting storability is poor. Emulgators of the fatty amine derivative type are known as moisteners for pigments. It should be assumed that corresponding moisteners for pigments with a similar chemical structure can also be used with success as emulgator A in the emulsion according to the invention.

Emulgator B in form of a fatty alcohol polyglycolether can according to tests performed be omitted during the production of the emulsion. This emulgator is, however, of importance for the stability and is necessary when the stock emulsion is mixed/diluted with polluted process water. Emulgators of the fatty alcohol polyglycolether type are known for use within the cosmetic industry. Corresponding emulgators to be used in cosmetic products and/or of a similar chemical structure can probably also be used with success as emulgator B in the emulsion according to the invention.

Usually the emulsion according to the invention also contains a conventional stabilizer which is usually necessary in order to make the emulsion storable. The emulsion according to the invention contains a relatively low amount of the stabilizer, which means that the dust-binding properties of the emulsion are not reduced. Polysaccharide-based stabilizers can for instance be used as stabilizers. The price is another factor rendering it desired to keep the amount of stabilizer as low as possible.

In order to prevent the emulsion from serving as nutrient substance for microorganisms, it contains usually a preservative usually of the formaldehyde type.

The oil used in the emulsion can in principle be any oil being fluid at the use temperature. Usually an oil is used which is of a viscosity at 40°C of between 300 and 600 mm²/s (300 and 600 centistoke) and a viscosity at 100°C of between 25 and 35 mm²/s (25 and 35 centistoke).

Such an oil results at an oil content of 50 to 65% by weight in the stock emulsion in a viscosity at 20°C of between 100 and 400 mm²/s (100 and 400 centistoke) for the emulsion.

In view of the risk of corrosion, the emulsion according to the invention is often set at a neutral pH-value for instance in the range 6 to 8.

### Example 1

A stock emulsion to be used as dust-binding emulsion is produced from the following ingredients:
60% by weight of Shell Oil 7465
0.4% by weight of AKZO EN 682
0.5% by weight of MULSIFAN RT 24 N
0.15% by weight of RHODOPOL 23
0.08% by weight of PREVENTOL D2
38.87% by weight of water.

Shell Oil 7465 is inter alia delivered by A/S Dansk Shell, Copenhagen, Denmark, and is a paraffinic oil with a flash point at 310°C, a pour point at -9°C, and a viscosity at 40°C of 460 460 mm²/s (centistoke).

AKZO EN 682 is delivered by Akzo, Amersfoort, The Netherlands, and is a fatty amine derivative (emulgator A) in form of N-coco-3-aminobutyric acid of the formula

R-NH-CH(CH₃)-CH₂-COOH

where R typically is C₈₋₁₈alkyl. This emulgator is marketed for use as moistener for pigments. According to the contractor AKZO EN 682 is usually marketed under the Trade Name ARMEEN Z9 SPECIAL.

MULSIFAN RT 24 N is delivered by Zschimmer & Schwarz GmbH & Co. Chemische Fabriken, Lahnstein/Rhein, Germany, and is a fatty alcohol polyglycolether (emulgator B) in form of a polyethyleneglycolether of lauryl alcohol of the formula

CH₃(CH₂)₁₀CH₂(OCH₂CH₂)ₙOH

where n has an average value of 4. This emulgator is used within the cosmetic industry and is also called LAURETH-4.

RHODOPOL 23 is delivered by Rhone-Poulenc, France, and is a stabilizer based on xanthan gum (polysaccharide).

PREVENTOL D2 is a preservative delivered by Bayer, Germany.

The emulsion is produced by the water being heated to 50 to 60°C, whereafter emulgators, stabilizer, and preservative are admixed. The oil is heated to 50 to 70°C, and the two phases are emulgated in an emulsion mill of a conventional type with a rotor and a stator where water and oil are separately fed into the interspace between the rotor and the stator in such a manner that the oil is ground into small drops and thereby emulgated. This type of emulsion mill is conventionally used for the production of bitumen emulsions. The choice of emulsion mill is not critical as other types of emulsion mills are expected to be applicable by the production of the emulsion according to the invention. Thus other types of emulsion mills used for the production of bitumen emulsions can for instance be employed.

At the glass-wool factory a 10% oil emulsion is produced from the stock emulsion by means of approximately 17% by weight of the stock emulsion and approximately 83% by weight of process water. Furthermore a solution or dispersion is produced which contains a binder in form of a conventional phenolformaldehyde resin dissolved in process water. When silicone also is to be used in the working emulsion, an emulsion thereof is produced by means of process water. Immediately before the use, a working emulsion is produced from the diluted 10% oil emulsion and the binder solution, and optionally the silicone emulsion while, if desired, additional process water is added in order to obtain the desired composition. Before the use of the process water as ingredient in the various emulsions and the solution, said process water must be subjected to a filtration in order to remove solid impurities. In this maner a clogging of the nozzles in the spraying means used is avoided.

Based on the above ingredients a working emulsion is produced which is of a composition varying in response to the desired properties of the final glass-wool product. An indicative composition of the working emulsion can be:
7% by weight of the 10% oil emulsion
21% by weight of binder solution (approximately 23% of dry matter)
72% by weight of process water.

This mixture must be stable for 30 to 60 seconds.

The working emulsion is fed to a plurality of spraying means, and the mixture is sprayed together with compressed air into a flow of melted glass passing downwards through the nozzles of the spraying means. The resulting glass fibres are coated with the oil emulsion and are dried and further processed to form glass fibre mats.

The above stock emulsion has been tested in connection with production of glass wool, and it turned out to provide satisfying results. Thus it was considered positive by the glass-wool manufacturer. The stock emulsion was stable in storage without separation for at least 3 months and with stirring for at least 6 months. The diluted emulsion containing 10% by weight of oil meets the requirement concerning being stable for at least 24 hours, and the working emulsion possessed the necessary stability for 30 to 60 seconds. In addition the glass-wool manufacturer discovered that the dust-binding capacity was satisfying. After the drying in the oven of the produced fibre material no problems were observed of a reemulgation of oil or silicone, which proves that the emulgators used were decomposed during the drying process.

### Example 2

A protective, dust-binding oil/water emulsion was produced for treatment of coal in order to reduce the; tendency to spontaneous combustion, said emulsion being produced from the following ingredients:
60% by weight of paraffinic oil of a viscosity at 40°C of 54 54 mm²/s (centistoke),
0.2% by weight of AKZO EN 682
0.4% by weight of MULSIFAN RT 24 N
0.08% by weight of RHODOPOL 23
39.32% by weigth of water.

This emulsion was diluted immediately before use to a 30% by weight oil emulsion and distributed across the coal by way of spraying.

### Example 3

A stable stock emulsion to be used by the production of glass wool in the manner described in Example 1 was produced from the following ingredients:
48% by weight of Shell Oil 7465
0.7% by weight of AKZO EN 682
0.9% by weight of MULSIFAN RT 24 N
0.08% by weight of RHODOPOL 23
0.12% by weight of PREVENTOL D2
51.3% by weight of water.

### Example 4

A stable stock emulsion to be used by the production of glass wool in the manner described in Example 1 was produced from the following ingredients:
68% by weight of Shell Oil 7465
0.2% by weight of AKZO EN 682
0.3% by weight of MULSIFAN RT 24 N
0.3% by weight of RHODOPOL 23
0.1% by weight of PREVENTOL D2
30% by weight of water.

### Example 5

A stable stock emulsion to be used by the production of glass wool in the manner described in Example 1 was produced from the following ingredients:
50% by weight of Shell Oil 7465
0.3% by weight of AKZO EN 682
1.0% by weight of MULSIFAN RT 24 N
0.2% by weight of RHODOPOL 23
0.1% by weight of PREVENTOL D2
48.4% by weight of water.

### Example 6

A stable stock emulsion to be used by the production of glass wool in the manner described in Example 1 was produced from the following ingredients:
50% by weight of Shell Oil 7465
0.9% by weight of AKZO EN 682
0.3% by weight of MULSIFAN RT 24 N
0.2% by weight of RHODOPOL 23
0.1% by weight of PREVENTOL D2
48.5% by weight of water.

### Example 7

A stock emulsion to be used by the production of glass wool was produced from the following ingredients:
60% by weight of Shell Oil 7465
1% by weight of AKZO N 682
4% by weight of MULSIFAN RT 24 N
0.07% by weight of PREVENTOL D2
34.925% by weight of water.

The stability of the emulsion was evaluated in the following manner:

### Storability

The storability of the stock emulsion was tested in undiluted state, and a satisfying stability was observed for more than 3 months.

### 10% oil emulsion (in process water)

The stock emulsion was diluted with process water to obtain a 10% oil emulsion. The emulsion was observed during stay in a graduated cylinder. No phase separation was observed after 4 hours. After 72 hours a very weak phase separation was observed. After stirring the emulsion was again homogenous.

### Working emulsion

A working emulsion was produced from the 10% oil emulsion as described in Example 1 containing both binder and silicone. The working emulsion was observed during stay in a graduated cylinder. The emulsion remained stable for at least 2 hours. After stay for 72 hours, the emulsion immediately became homogenous after stirring.

### General evaluation

In general the stability is outstanding and significantly improved compared to the requirements presented to such an emulsion by the glass-wool manufacturer. It is, however, a question of a high content of the emulgators which makes the product more expensive.

### Example 8

The present Example shows a comparison between a stock emulsion without emulgator B (stock emulsion I), a stock emulsion without emulgator A (stock emulsion II), and a stock emulsion according to the invention containing a combination of emulgator A and emulgator B. The composition of these stock emulsions appears from the following Table:

| Stock emulsion | I | II | III |
|---|---|---|---|
| | % by weight | % by weight | % by weight |
| Shell Oil 7465 | 60 | 60 | 60 |
| Emulgator A (AKZO EN 682) | 1 | - | 0.4 |
| Emulgator B (MULSIFAN RT 24 N) | - | 1 | 0.5 |
| RHODOPOL 23 | 0.15 | - | 0.15 |
| PREVENTOL D2 | 0.075 | 0.075 | 0.075 |
| Water | 38.775 | 38.925 | 38.875 |

The stability of the stock emulsions in undiluted and diluted state was tested in the same manner as described in Example 7.

### Stock emulsion I

The stability in storage: Stable for more than 3 months.

10% oil emulsion: After stay for 90 minutes, 2% by volume of water phase had been separated. With some difficulty the emulsion could be made homogenous by a vigorous stirring. The phase separation between the two phases was very sharp.

Working emulsion: After stay for 20 minutes a slight depositing at the bottom had occurred.

### Stock emulsion II

This emulsion was inapplicable because very quickly deposits were observed after production of a 10% oil emulsion by means of process water.

### Stock emulsion III

Stability in storage: Stable for more than 3 months.

10% oil emulsion: After stay for 90 minutes 2% of water phase had developed, but the phase separation was not as sharp as in connection with stock emulsion I. The homogeneity was easily reestablishable by way of stirring.

Working emulsion: A slight depositing developed after 20 minutes.

General evaluation: The phase separation in 10% oil emulsion in process water was significantly sharper with stock emulsion I compared to stock emulsion III, and as far as stock emulsion I was concerned it was much more difficult to reestablish a homogenous emulsion by way of stirring. Thus stock emulsion I was more sensitive to various additions and pollutions in the process water.

## Claims

1. An emulsion of oil in water containing oil, emulgator, water, as well as possible, additional adjuvants, **characterised** by containing as emulgator a combination of an emulgator A and an emulgator B, where emulgator A is based on a fatty amine derivative, and emulgator B is based on a fatty alcohol glycolether.

2. An emulsion as claimed in claim 1, **characterised** by the weight ratio A:B of emulgator A to emulgator B being 0.3:1 to 3:1.

3. An emulsion as claimed in claim 1, **characterised** by containing 0.2 to 2 parts by weight of emulgator A per 100 parts by weight of oil.

4. An emulsion as claimed in claim 1, **characterised** by containing 0.3 to 2.5 parts by weight of emulgator B per 100 parts by weight of oil.

5. An emulsion as claimed in claim 1, **characterised** by further containing 0.1 to 1.0 parts by weight of stabilizer per 100 parts by weight of oil.

6. An emulsion as claimed in claim 1, **characterised** by the oil being a paraffinic oil of a viscosity at 40°C of 100 to 1000 mm²/s (100 to 1,000 centistoke).

7. An emulsion as claimed in any of the preceding claims, **characterised** by comprising
45 - 70% by weight of paraffinic oil
0.2 - 0.8% by weight of emulgator A
0.25 - 1.0% by weight of emulgator B
0.07 - 0.3% by weight of polysaccharide stabilizer
0.02 - 0.3% by weight of preservative
and by the remainder being water.

## Patentansprüche

1. Emulsion von Öl in Wasser, die Öl, einen Emulgator, Wasser sowie mögliche zusätzliche Hilfsstoffe enthält,
dadurch gekennzeichnet,
daß sie als Emulgator eine Kombination eines Emulgators A und eines Emulgators B enthält, wobei der Emulgator A auf einem Fettaminderivat basiert und der Emulgator B auf einem Fettalkoholglykolether basiert.

2. Emulsion nach Anspruch 1,
dadurch gekennzeichnet,
daß das Gewichtsverhältnis A:B von Emulgator A zu Emulgator B einen Wert von 0,3:1 bis 3:1 hat.

3. Emulsion nach Anspruch 1,
dadurch gekennzeichnet,
daß sie 0,2 bis 2 Gewichtsteile des Emulgators A pro 100 Gewichtsteile Öl enthält.

4. Emulsion nach Anspruch 1,
dadurch gekennzeichnet,
daß sie 0,3 bis 2,5 Gewichtsteile des Emulgators B pro 100 Gewichtsteile Öl enthält.

5. Emulsion nach Anspruch 1,
dadurch gekennzeichnet,
daß sie ferner 0,1 bis 1,0 Gewichtsteile des Stabilisators pro 100 Gewichtsteile Öl enthält.

6. Emulsion nach Anspruch 1,
dadurch gekennzeichnet,
daß das Öl ein Paraffinöl mit einer Viskosität bei 40 °C von 100 bis 1 000 mm²/s (100 bis 1 000 Zentistoke) ist.

7. Emulsion nach einem der vorhergehenden Ansprüche,
dadurch gekennzeichnet,
daß sie folgendes enthält:
45 bis 70 Gewichtsprozent Paraffinöl
0,2 bis 0,8 Gewichtsprozent Emulgator A
0,25 bis 1,0 Gewichtsprozent Emulgator B
0,07 bis 0,3 Gewichtsprozent Polysaccharidstabilisator
0,02 bis 0,3 Gewichtsprozent Konservierungs
mittel wobei der Rest Wasser ist.

## Revendications

1. Emulsion d'huile dans l'eau, contenant de l'huile, un émulsifiant, de l'eau, ainsi qu'éventuellement des adjuvants additionnels, caracterisée en ce qu'elle contient comme émulsifiant une combinaison d'un émulsifiant A et d'un émulsifiant B, où l'émulsifiant A est à base de dérive d'amine grasse et l'émulsifiant B est à base de glycoléther d'alcool gras.

2. Emulsion selon la revendication 1, caractérisée en ce que le rapport pondéral A:B de l'émulsifiant A à l'émulsifiant B est de 0,3:1 à 3:1.

3. Emulsion selon la revendication 1, caractérisée en ce qu'elle contient 0,2 à 2 parties en poids d'émulsifiant A pour 100 parties en poids d'huile.

4. Emulsion selon la revendication 1, caractérisée en ce qu'elle contient 0,3 à 2,5 parties en poids d'émulsifiant B pour 100 parties en poids d'huile.

5. Emulsion selon la revendication 1, caractérisée en ce qu'elle contient en outre 0,1 à 1,0 partie en poids de stabilisant pour 100 parties en poids d'huile.

6. Emulsion selon la revendication 1, caractérisée en ce que l'huile est une huile de paraffine ayant une viscosité à 40°C de 100 à 1 000 mm²/s (10 à 1 000 cSt).

7. Emulsion selon l'une quelconque des revendications précédentes, caractérisée en ce qu'elle comprend
45 à 70 % en poids d'huile de paraffine
0,2 à 0,8 % en poids d'émulsifiant A
0,25 à 1,0 % en poids d'émulsifiant B
0,07 à 0,3 % en poids de stabilisant polysaccharidique
0,02 à 0,3 % en poids d'agent de conservation,
le reste étant de l'eau.
